# EUROPEAN PATENT SPECIFICATION

(11) **EP 3 878 753 B1**
(45) Date of publication and mention of the grant of the patent: **25.09.2024**
(21) Application number: 21162310.3
(22) Date of filing: 12.03.2021
(51) Int. Cl.: B64D 29/06, B64C 1/10, B64C 1/14, B64C 7/02, E05C 19/14

(54) **LATCH ASSEMBLY**
VERRIEGELUNGSANORDNUNG
DISPOSITIF DE VERROUILLAGE

(30) Priority: 13.03.2020 US 202016818985
(43) Date of publication of application: 15.09.2021
(73) Proprietor: Rohr, Inc., Chula Vista, CA 91910-2098 (US)
(72) Inventor: PRETTY, Sean, Jamul, CA 91935 (US)
(74) Representative: Dehns

(56) References cited:
- GB-A- 2 288 578
- US-A1- 2004 104 583
- US-A1- 2012 235 425
- US-A1- 2013 106 122
- US-A1- 2016 280 384

## Description

### BACKGROUND

### 1. Technical Field

This disclosure (invention) relates generally to a latch assembly for a structure such as, for example, an aircraft cowl.

### 2. Background Information

A modern aircraft propulsion system typically includes a gas turbine engine and a nacelle housing and providing an aerodynamic covering for the gas turbine engine. The nacelle may include one or more cowls for covering components of the gas turbine engine. These cowls may be pivotally mounted to a stationary structure enabling those cowls to be opened for providing access to the components underneath. The cowls may be secured in a closed position using one or more latch assemblies.

Various types and configurations of latch assemblies are known in the art. While these known latch assemblies have various benefits, they are typically difficult and/or time consuming to inspect, replace and/or service. A typical latch assembly, for example, is installed from a backside of a cowl and mechanically fastened to the cowl with one or more mechanical fasteners such as bolts and/or rivets. The latch assembly may be covered with insulation material and/or other components of the nacelle. Therefore, in order to inspect, replace and/or service a typical latch assembly, a technician must first (1) open the cowl, (2) remove the insulation and/or other components covering or otherwise hindering access to the latch assembly and (3) remove the mechanical fasteners securing the latch assembly. There is a need in the art therefore for a latch assembly which can be installed and/or removed from a cowl or other component without requiring access to an interior of the cowl and/or removal of other elements from the cowl.

US 2016/280384 discloses a high visibility latch handle.

US 2013/106122 discloses a rotary-handle latch.

US 2012/235425 discloses a pin latch having an intermediate position.

US 2004/104583 discloses a device for indicating incorrect closure of a locking means located between two fan cowlings of an aircraft engine nacelle.

GB 2,288,578 discloses an aircraft propulsive power unit.

### SUMMARY OF THE DISCLOSURE

According to an aspect of the present invention, an assembly is provided for an aircraft in accordance with appended claim 1.

The following optional features may be applied to any of the above aspects.

The second sidewall may be configured with a second slot. The latch pin may be seated in the second slot.

The first slot may have a slot centerline. A first portion of the slot centerline may overlap a second portion of the slot centerline.

The first slot may have a slot centerline. A first portion of the slot centerline may be angularly offset from a second portion of the slot centerline by an acute angle.

A first portion of the first slot may overlap a second portion of the first slot. The first portion of the first slot may be separated from the second portion of the first slot by a projection.

A height of the projection may be greater than one-quarter of a diameter of the latch pin.

The assembly may also include a structure. The latch assembly may also include a keeper connected to the structure. The latch may include a hook configured to mate with the keeper to maintain the cowl in the closed position when the latch is in a closed position.

The assembly may also include nacelle which includes the cowl.

The structure may be a beam.

The foregoing features and the operation of the invention will become more apparent in light of the following description and the accompanying drawings.

### BRIEF DESCRIPTION OF THE DRAWINGS

FIG. 1 is a partial side sectional illustration of an assembly.
FIG. 2 is a side illustration of an aircraft propulsion system.
FIG. 3 is a schematic cross-sectional illustration of the aircraft propulsion system with its cowls in a closed position.
FIG. 4 is a schematic cross-sectional illustration of the aircraft propulsion system with its cowls in an open position.
FIG. 5 is a partial illustration of a latch assembly with its latch in an open position.
FIG. 6 is a partial illustration of an interior of the assembly of FIG. 1.
FIG. 7 is a perspective illustration of a portion of a housing.
FIG. 8 is a side illustration of a portion of the housing.
FIG. 9 is a side illustration of a portion of the latch assembly with its latch in a closed position.
FIG. 10 is a side illustration depicting installation of a latch pin in a slot in the housing.

### DETAILED DESCRIPTION

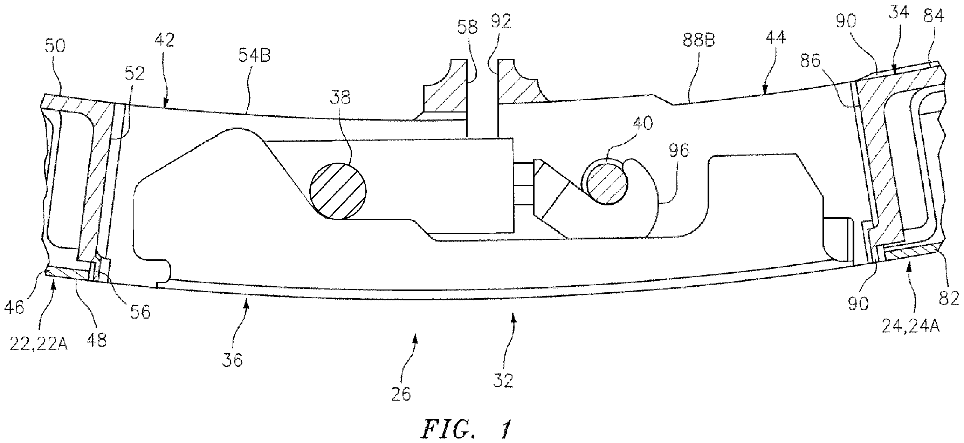

FIG. 1 illustrates an assembly 20 for a structure of an aircraft. An example of the aircraft structure is a nacelle for housing an aircraft propulsion system such as, but not limited to, a gas turbine engine. Another example of the aircraft structure is a fuselage of the aircraft. The assembly 20 of the present disclosure, however, is not limited to the foregoing exemplary aircraft structures. Furthermore, the assembly 20 is not limited to aircraft applications. For example, the assembly 20 and/or its latch assembly described below may be configured with any device and/or system which utilizes a latch for securing a moveable component; e.g., a door or cowl.

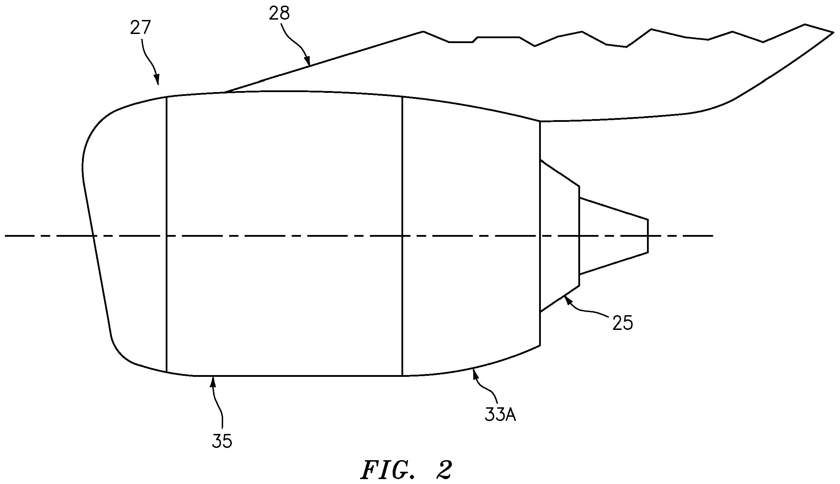

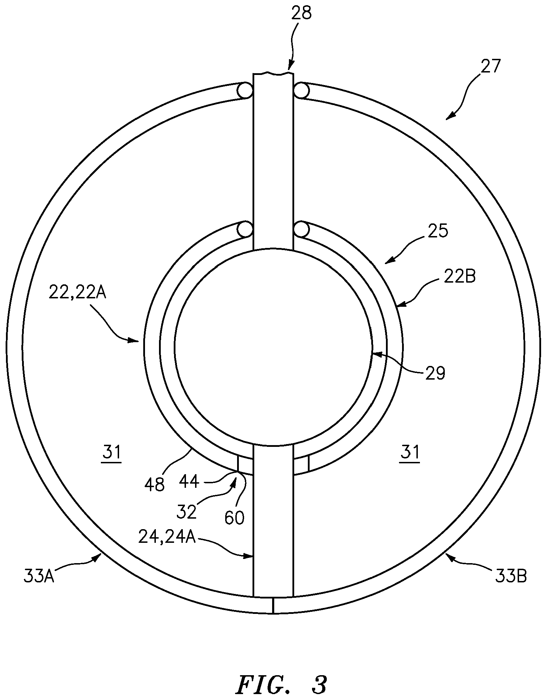

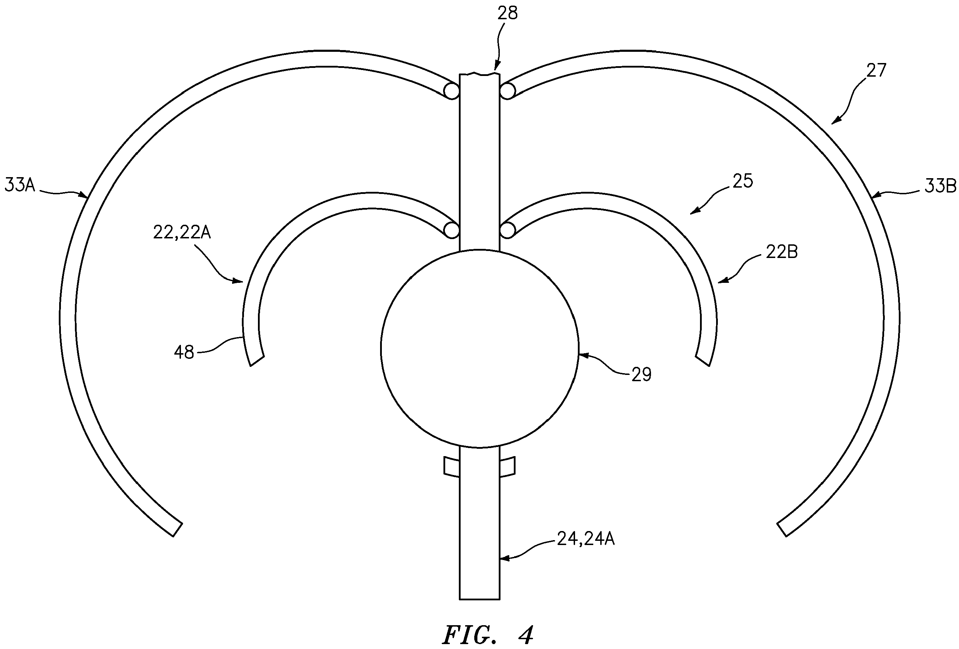

The assembly 20 of FIG. 1 includes one or more structures 22 and 24 and a latch assembly 26. Referring to FIGS. 2-4, the first structure 22 may be configured as a part of an inner structure 25 (sometimes referred to as "an inner fixed structure" or "IFS") of an aircraft propulsion system nacelle 27. The first structure 22 of FIGS. 3 and 4, for example, is configured as a first cowl 22A (e.g., an inner fixed cowl) of the nacelle inner structure 25. Referring to FIGS. 2-4, the first cowl 22A is movably (e.g., pivotally) connected to a stationary structure (e.g., 28). The first cowl 22A is configured to move (e.g., pivot) between a closed position (see FIG. 3) and an open position (see FIG. 4). In the closed position, the first cowl 22A is configured to house and provide an aerodynamic covering for one or more components of a gas turbine engine, which components may include one or more components of a core 29 of the gas turbine engine. The gas turbine engine core 29 includes a compressor section, a combustor section and a turbine section. The first cowl 22A and, more generally, the nacelle inner structure 25 also form at least an inner peripheral portion of a flowpath 31 (e.g., a bypass flowpath) within the aircraft propulsion system.

The second structure 24 may be configured as another part of the nacelle inner structure 25. The second structure 24 of FIGS. 3 and 4, for example, is configured as a beam 24A to which the cowls 22A and 22B are latched / secured during propulsion system operation. Fan cowls 35 (one shown in FIG. 2) and/or outer thrust reverser halves 33A and 33B (generally referred to as "33") may also be configured to be latched / secured to the beam 24A during propulsion system operation. In one embodiment, the second structure 24 / beam 24A of FIGS. 3 and 4 also forms side peripheral portions of D-ducts (sometimes also referred to as "C-ducts"), which collectively form at least a portion of the flowpath 31. The present disclosure, however, is not limited to such a D-duct configuration. For example, in other embodiments, the aircraft propulsion system / the assembly 20 may be configured with an O-duct.

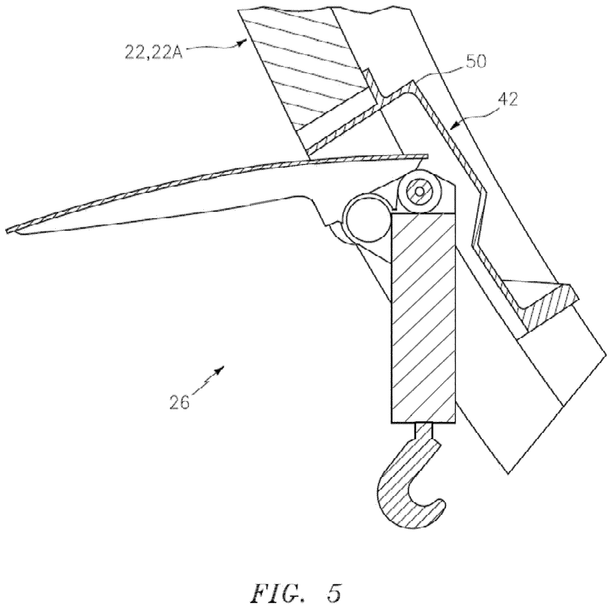

The latch assembly 26 of FIG. 1 is arranged at an interface 32 between the first cowl 22A and the beam 24A. The latch assembly 26 is configured to secure the first cowl 22A to the beam 24A in its closed position when the latch assembly 26 is in a closed position (see FIG. 1). The latch assembly 26 is further configured to enable movement of the first cowl 22A when the latch assembly 26 is in an open position (see FIG. 5).

The latch assembly 26 of FIG. 1 includes a housing assembly 34, a latch 36, a latch pin 38 and a keeper 40. The housing assembly 34 is configured as a frame and/or mounting structure for the latch 36. The housing assembly 34 of FIG. 1 includes a first housing 42 (e.g., U-shaped frame segment) and a second housing 44 (e.g., U-shaped frame segment).

The first housing 42 is positioned beneath a first skin 46 of the first cowl 22A, which first skin 46 partially forms a flow surface 48 of the nacelle inner structure 25 (see also FIGS. 3 and 4). A base 50 of the first housing 42 is connected to the first cowl 22A. The first housing 42, for example, may be mechanically fastened and/or bonded to a frame on an underside of the first skin 46.

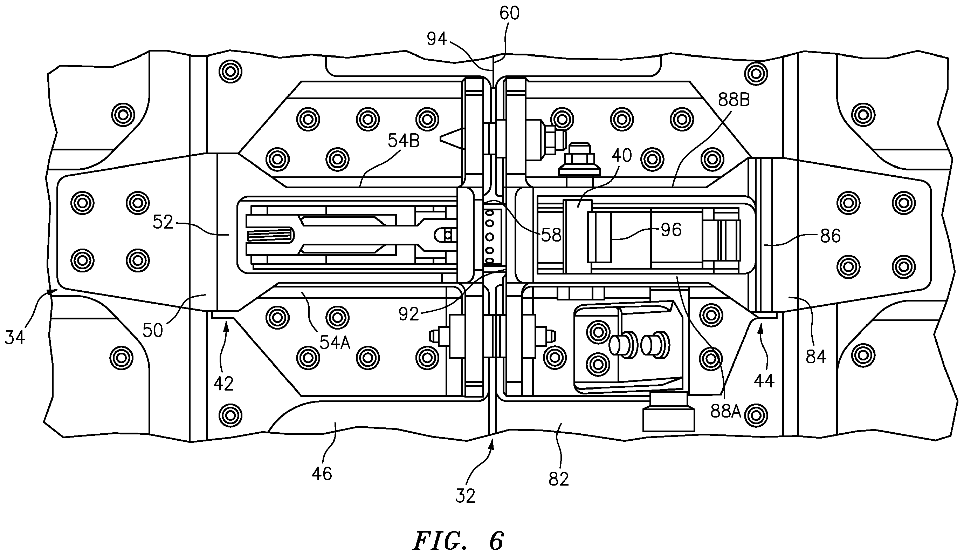

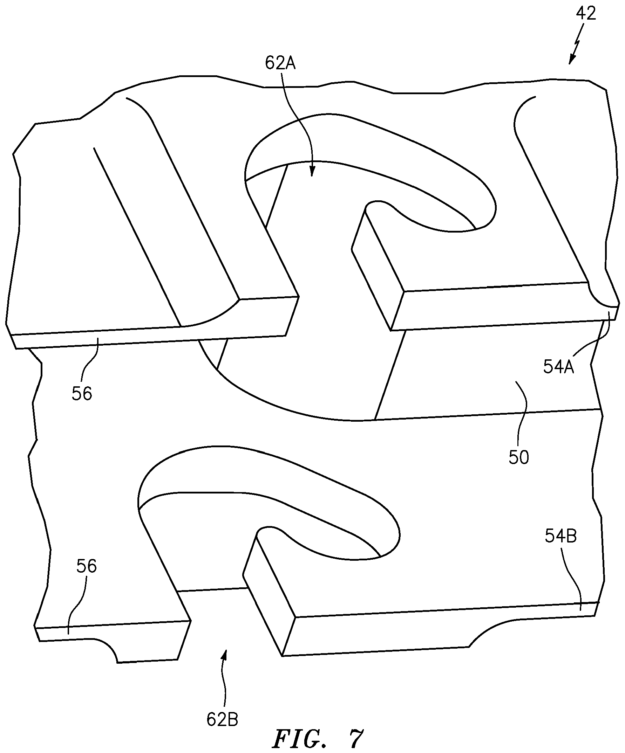

Referring to FIGS. 1 and 6, the first housing 42 includes the base 50, an end wall 52 and first and second sidewalls 54A and 54B (generally referred to as "54"). The end wall 52 projects vertically out from the base 50 (e.g., in a direction towards the first skin 46) to a distal side 56 of the first housing 42 (see FIG. 1). The end wall 52 extends laterally between and is connected to the first sidewall 54A and the second sidewall 54B. The first sidewall 54A and the second sidewall 54B each project vertically out from the base 50 (e.g., in the direction towards the first skin 46) to the distal side 56 of the first housing 42 (see FIG. 7). The first sidewall 54A and the second sidewall 54B each project longitudinally out from the end wall 52 to a distal end 58 of the first housing 42. This distal end 58 may be substantially aligned with (or slightly recessed from) an edge 60 of the first cowl 22A.

Referring to FIG. 7, the first sidewall 54A is configured with a (e.g., open ended) first slot 62A. The second sidewall 54B is configured with a (e.g., open ended) second slot 62B.

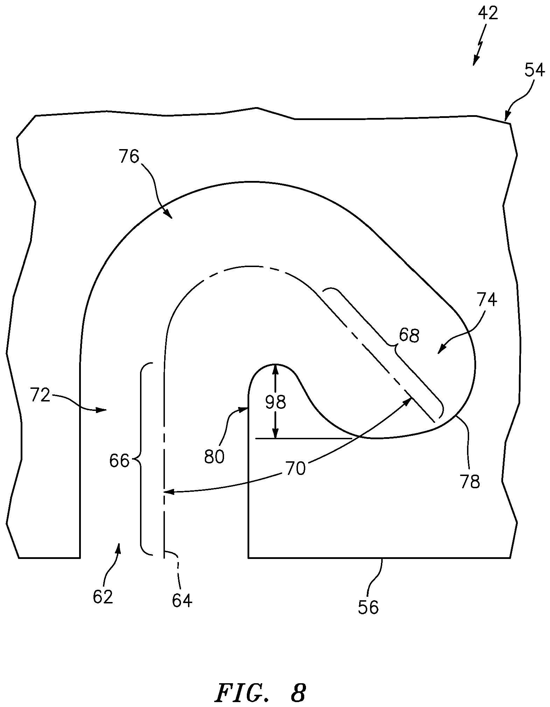

Referring to FIG. 8, each slot 62A, 62B (generally referred to as "62") may have a hook shape; e.g., each slot 62 may be a hooked slot. Each slot 62, for example, may extend along a slot centerline 64. A (e.g., straight) first portion 66 of the slot centerline 64 may extend substantially vertically into / within the respective sidewall 54. A (e.g., straight) second portion 68 of the slot centerline 64 may extend vertically and longitudinally within the respective sidewall 54. The second portion 68 of the slot centerline 64 may thereby be angularly offset from the first portion 66 of the slot centerline 64 by an acute (e.g., included) angle 70. This angle 70 may be between ten degrees (10°) and sixty degrees (60°); e.g., between twenty degrees (20°) and forty degrees (40°). Of course, in other embodiments, the angle 70 may be less than ten degrees (10°) or greater than sixty degrees (60°). With this arrangement, the second portion 68 of the slot centerline 64 (e.g., vertically) overlaps the first portion 66 of the slot centerline 64.

Each slot 62 of FIG. 8 includes a first portion 72 and a second portion 74. The slot first portion 72 is configured as an open portion of the slot 62. The slot first portion 72, for example, extends along the first portion 66 of the slot centerline 64 (e.g., in a direction away from the first skin 46) into the respective sidewall 54 from the distal side 56 of the first housing 42. The slot second portion 74, on the other hand, is configured as a blind / closed slot. The slot second portion 74, for example, is coupled with the slot first portion 72 at a corner 76. The slot second portion 74 extends along the second portion 68 of the slot centerline 64 (e.g., in a direction towards from the first skin 46) within the respective sidewall 54 to a distal closed end 78 of the slot 62. This slot second portion 74 thereby (e.g., vertically) overlaps the first portion 66 of the slot centerline 64. The slot second portion 74 is further (e.g., longitudinally) separated from the slot first portion 72 by a projection 80 formed by a portion of the respective sidewall 54 longitudinally between the portions 72 and 74.

Referring to FIG. 7, each slot 62 may extend laterally through the respective sidewall 54.

Referring to FIG. 1, the second housing 44 is positioned beneath a second skin 82 of the beam 24A, which second skin 82 partially forms the flow surface 48 of the nacelle. A base 84 of the second housing 44 is connected to the beam 24A. The second housing 44, for example, may be mechanically fastened and/or bonded to a frame on an underside of the second skin 82.

Referring to FIGS. 1 and 6, the second housing 44 includes the base 84, an end wall 86 and first and second sidewalls 88A and 88B (generally referred to as "88"). The end wall 86 projects vertically out from the base 84 (e.g., in a direction towards the second skin 82) to a distal side 90 of the second housing 44 (see FIG. 1). The end wall 86 extends laterally between and is connected to the first sidewall 88A and the second sidewall 88B. The first sidewall 88A and the second sidewall 88B each project vertically out from the base 84 (e.g., in the direction towards the second skin 82) to the distal side 90 of the second housing 44 (see FIG. 1). The first sidewall 88A and the second sidewall 88B each project longitudinally out from the end wall 86 to a distal end 92 of the second housing 44. This distal end 92 may be substantially aligned with an edge 94 of the beam 24A, which edge 94 is next to the edge 60 of the first cowl 22A at the interface 32.

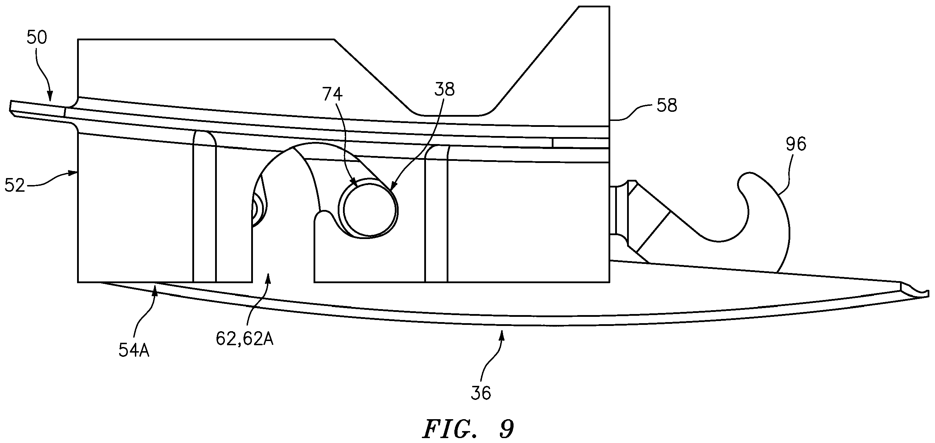

Referring still to FIGS. 1 and 6, the latch 36 is arranged laterally between the sidewalls 54. The latch 36 is movably (e.g., pivotally) mounted to the first housing 42 by the latch pin 38. Referring to FIG. 9, the latch pin 38 is seated within a respective one of the slots 62. More particularly, each end of the latch pin 38 is seated within a respective one of the slot second portions 74.

Referring to FIG. 6, the keeper 40 is connected to and extends between the first sidewall 88A and the second sidewall 88B of the second housing 44. Referring to FIG. 1, a hook 96 of the latch 36 is configured to mate with (e.g., hook around) the keeper 40 when the latch 36 is in its closed position to thereby secure the first cowl 22A to the beam 24A in its closed position.

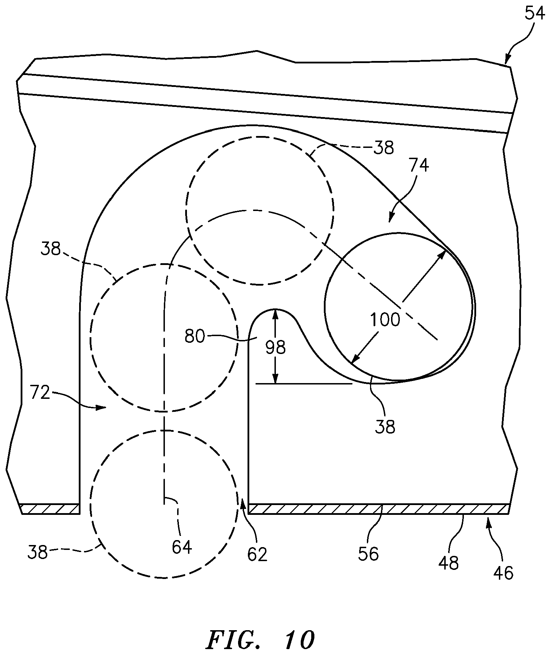

The latch assembly 26 configuration described above enables the latch 36 to be removed from the first housing 42 while the first housing 42 is still connected to the first cowl 22A and while the first cowl 22A is in the closed position. The latch assembly 26 configuration described above also or alternatively enables the latch 36 to be removed as a cartridge (e.g., a single modular unit) from an exterior of the first cowl 22A without, for example, accessing a back side of the first cowl 22A. For example referring to FIG. 10, during installation, the latch pin 38 is mated with the latch 36 (see FIG. 9), and the latch pin 38 is translated along the slot centerlines 64 through the slots 62 from openings to the slots 62 to the slot second portions 74. Once the latch pin 38 is seated within the slot second portions 74, the latch pin 38 mounts the latch 36 to the first housing 42 (see FIGS. 1 and 9). This process may then be reversed to remove the latch 36 from the first housing 42.

Referring still to FIG. 10, when the latch 36 is mounted to the first housing 42, the latch pin 38 may be retained within the slot second portions 74 by the respective projection 80 while the latch 36 is in its open position. When the latch 36 is in its closed position, the latch 36 pulls the latch pin 38 away against the sidewall 54 and away from the slot first portions 72.

In some embodiments, the projection 80 has a height 98. This height 98 may be sized greater than one-quarter (1/4) of a diameter 100 of the latch pin 38. The height 98, for example, may be between one-quarter (1/4) of the diameter 100 and the diameter 100; e.g., the height 98 may be equal to one-half of the diameter 100. The present disclosure, however, is not limited to the foregoing exemplary embodiments. For example, in other embodiments, the height 98 may alternatively be less than one-quarter (1/4) of the diameter 100 or greater than the diameter 100.

While the latch assembly 26 is described above as securing the first cowl 22A to the beam 24A, the present disclosure is not limited to such an exemplary arrangement. For example, in some embodiments, the latch assembly 26 (or a second of the latch assemblies 26) may secure the second cowl 22B to the beam 24A. In some embodiments, the latch assembly 26 may secure the cowls 22A and 22B directly together where, for example, the beam 24A is omitted. In some embodiments, the latch assembly 26 may be configured to secure one of the fan cowls 35 or one of the thrust reverser halves 33 to the beam 24A or another structure. In some embodiments, the latch assembly 26 may be configured to secure the two fan cowls 35 together. In some embodiments, the latch assembly 26 may be configured to secure the two thrust reverser halves 33 together. In some embodiments, the halves 33 may be bypass duct halves (or segments) and may be configured without or discrete from a thrust reverser system. The present disclosure therefore is not limited to any particular latch assembly applications.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims.

## Claims

1. An assembly (20) for an aircraft, comprising:
a cowl (22A) configured to move between an open position and a closed position; and
a latch assembly (26) including a latch (36) and a housing (42), the latch (36) pivotally mounted to the housing (42), and the housing (42) connected to the cowl (22A);
the latch assembly (26) configured such that the latch (36) is removable from the housing (42) while the housing (42) is connected to the cowl (22A) and the cowl (22A) is in the closed position;
wherein the latch assembly (26) further includes a latch pin (38) that pivotally mounts the latch (36) to the housing (42), and the latch pin (38) is removable from the housing (42) while the housing (42) is connected to the cowl (22A) and the cowl (22A) is in the closed position;
wherein the housing (42) includes a first sidewall (54A) and a second sidewall (54B), the first sidewall (54A) is configured with a first slot (62A), the latch (36) is arranged between the first sidewall (54A) and the second sidewall (54B), and the latch pin (38) is seated in the first slot (62A),
**characterised in that**:
the first slot (62A) has a hook shape.

2. The assembly (20) of claim 1, wherein:
the second sidewall (54B) is configured with a second slot (62B); and
the latch pin (38) is seated in the second slot (62B).

3. The assembly (20) of claim 2, wherein the second slot (62B) has a hook shape.

4. The assembly (20) of any preceding claim, wherein:
the first slot (62A) has a slot centerline (64); and
a first portion (66) of the slot centerline (64) overlaps a second portion (68) of the slot centerline (64).

5. The assembly (20) of any preceding claim, wherein:
the first portion (66) of the slot centerline (64) is angularly offset from the second portion (68) of the slot centerline (64) by an acute angle (70).

6. The assembly (20) of any preceding claim, wherein:
a first portion (72) of the first slot (62A) overlaps a second portion (74) of the first slot (62A);
the first portion (72) of the first slot (62A) is separated from the second portion (74) of the first slot (62A) by a projection (80).

7. The assembly (20) of claim 6, wherein a height (98) of the projection (80) is greater than one-quarter of a diameter (100) of the latch pin (38).

8. The assembly (20) of any preceding claim, further comprising:
a structure (24);
the latch assembly (26) further including a keeper (40) connected to the structure (24);
the latch (36) including a hook (96) configured to mate with the keeper (40) to maintain the cowl (22A) in the closed position when the latch (36) is in a closed position.

9. The assembly (20) of claim 8, wherein the structure (24) is a beam (24A).

10. The assembly (20) of any preceding claim, further comprising a nacelle (27) including the cowl (22A).

## Patentansprüche

1. Anordnung (20) für ein Luftfahrzeug, umfassend:
eine Verkleidung (22A), die dazu konfiguriert ist, sich zwischen einer offenen Position und einer geschlossenen Position zu bewegen; und
eine Verriegelungsanordnung (26), die eine Verriegelung (36) und ein Gehäuse (42) beinhaltet, wobei die Verriegelung (36) schwenkbar an dem Gehäuse (42) montiert ist und das Gehäuse (42) mit der Verkleidung (22A) verbunden ist;
wobei die Verriegelungsanordnung (26) dazu konfiguriert ist, dass die Verriegelung (36) von dem Gehäuse (42) abnehmbar ist, während das Gehäuse (42) mit der Verkleidung (22A) verbunden ist und die Verkleidung (22A) sich in der geschlossenen Position befindet;
wobei die Verriegelungsanordnung (26) ferner einen Verriegelungsstift (38) beinhaltet, der die Verriegelung (36) schwenkbar an dem Gehäuse (42) montiert, und der Verriegelungsstift (38) von dem Gehäuse (42) abnehmbar ist, während das Gehäuse (42) mit der Verkleidung (22A) verbunden ist und sich die Verkleidung (22A) in der geschlossenen Position befindet;
wobei das Gehäuse (42) eine erste Seitenwand (54A) und eine zweite Seitenwand (54B) beinhaltet, die erste Seitenwand (54A) mit einem ersten Schlitz (62A) konfiguriert ist, die Verriegelung (36) zwischen der ersten Seitenwand (54A) und der zweiten Seitenwand (54B) angeordnet ist, und der Verriegelungsstift (38) in dem ersten Schlitz (62A) sitzt,
**dadurch gekennzeichnet, dass**:
der erste Schlitz (62A) eine Hakenform aufweist.

2. Anordnung (20) nach Anspruch 1, wobei:
die zweite Seitenwand (54B) mit einem zweiten Schlitz (62B) konfiguriert ist; und der Verriegelungsstift (38) in dem zweiten Schlitz (62B) sitzt.

3. Anordnung (20) nach Anspruch 2, wobei der zweite Schlitz (62B) eine Hakenform aufweist.

4. Anordnung (20) nach einem der vorhergehenden Ansprüche, wobei:
der erste Schlitz (62A) eine Schlitzmittellinie (64) aufweist; und
ein erster Abschnitt (66) der Schlitzmittellinie (64) einen zweiten Abschnitt (68) der Schlitzmittellinie (64) überlappt.

5. Anordnung (20) nach einem der vorhergehenden Ansprüche, wobei:
der erste Abschnitt (66) der Schlitzmittellinie (64) gegenüber dem zweiten Abschnitt (68) der Schlitzmittellinie (64) um einen spitzen Winkel (70) winkelversetzt ist.

6. Anordnung (20) nach einem der vorhergehenden Ansprüche, wobei:
ein erster Abschnitt (72) des ersten Schlitzes (62A) einen zweiten Abschnitt (74) des ersten Schlitzes (62A) überlappt;
der erste Abschnitt (72) des ersten Schlitzes (62A) von dem zweiten Abschnitt (74) des ersten Schlitzes (62A) durch einen Vorsprung (80) getrennt ist.

7. Anordnung (20) nach Anspruch 6, wobei eine Höhe (98) des Vorsprungs (80) größer als ein Viertel eines Durchmessers (100) des Verriegelungsstifts (38) ist.

8. Anordnung (20) nach einem der vorhergehenden Ansprüche, ferner umfassend:
eine Struktur (24);
wobei die Verriegelungsanordnung (26) ferner einen mit der Struktur (24) verbundenen Halter (40) beinhaltet;
wobei die Verriegelung (36) einen Haken (96) beinhaltet, der dazu konfiguriert ist, mit dem Halter (40) zusammenzugreifen, um die Verkleidung (22A) in der geschlossenen Position zu halten, wenn sich die Verriegelung (36) in einer geschlossenen Position befindet.

9. Anordnung (20) nach Anspruch 8, wobei die Struktur (24) ein Balken (24A) ist.

10. Anordnung (20) nach einem der vorhergehenden Ansprüche, ferner umfassend eine Gondel (27), die die Verkleidung (22A) beinhaltet.

## Revendications

1. Ensemble (20) pour un aéronef, comprenant :
un capot (22A) configuré pour se déplacer entre une position ouverte et une position fermée ; et
un ensemble de verrouillage (26) comportant un verrou (36) et un boîtier (42), le verrou (36) monté de manière pivotante sur le boîtier (42), et le boîtier (42) relié au capot (22A) ;
l'ensemble de verrouillage (26) configuré de sorte que le verrou (36) peut être retiré du boîtier (42) tandis que le boîtier (42) est relié au capot (22A) et que le capot (22A) est en position fermée ;
dans lequel l'ensemble de verrouillage (26) comporte également une goupille de verrouillage (38) qui monte de manière pivotante le verrou (36) sur le boîtier (42), et la goupille de verrouillage (38) est amovible du boîtier (42) tandis que le boîtier (42) est relié au capot (22A) et le capot (22A) est en position fermée ;
dans lequel le boîtier (42) comporte une première paroi latérale (54A) et une seconde paroi latérale (54B), la première paroi latérale (54A) est configurée avec une première fente (62A), le verrou (36) est disposé entre la première paroi latérale (54A) et la seconde paroi latérale (54B), et la goupille de verrouillage (38) est placée dans la première fente (62A),
**caractérisé en ce que** :
la première fente (62A) a une forme de crochet.

2. Ensemble (20) selon la revendication 1, dans lequel :
la seconde paroi latérale (54B) est configurée avec une seconde fente (62B) ; et la goupille de verrouillage (38) est placée dans la seconde fente (62B).

3. Ensemble (20) selon la revendication 2, dans lequel la seconde fente (62B) a une forme de crochet.

4. Ensemble (20) selon une quelconque revendication précédente, dans lequel :
la première fente (62A) a une ligne centrale de fente (64) ; et une première partie (66) de la ligne centrale de la fente (64) chevauche une seconde partie (68) de la ligne centrale de la fente (64).

5. Ensemble (20) selon une quelconque revendication précédente, dans lequel :
la première partie (66) de la ligne centrale de la fente (64) est décalée angulairement de la seconde partie (68) de la ligne centrale de la fente (64) par un angle aigu (70).

6. Ensemble (20) selon une quelconque revendication précédente, dans lequel :
une première partie (72) de la première fente (62A) chevauche une seconde partie (74) de la première fente (62A) ;
la première partie (72) de la première fente (62A) est séparée de la seconde partie (74) de la première fente (62A) par une saillie (80).

7. Ensemble (20) selon la revendication 6, dans lequel une hauteur (98) de la saillie (80) est supérieure au quart du diamètre (100) de la goupille de verrouillage (38).

8. Ensemble (20) selon une quelconque revendication précédente, comprenant également :
une structure (24) ;
l'ensemble de verrouillage (26) comprenant également une armature (40) reliée à la structure (24) ;
le verrou (36) comportant un crochet (96) configuré pour s'accoupler à l'armature (40) pour maintenir le capot (22A) en position fermée lorsque le verrou (36) est dans une position fermée.

9. Ensemble (20) selon la revendication 8, dans lequel la structure (24) est une poutre (24A).

10. Ensemble (20) selon une quelconque revendication précédente, comprenant également une nacelle (27) comportant le capot (22A).
